# EUROPEAN PATENT APPLICATION

(11) **EP 4 307 658 A1**
(43) Date of publication of application: **17.01.2024**
(21) Application number: 23184311.1
(22) Date of filing: 07.07.2023
(51) Int. Cl.: H04N 7/18, G08B 13/196

(54) **METHODS FOR ADDING VIDEO STREAMS FROM ON-DEMAND CAMERAS THAT ARE MADE AVAILABLE TO A VIDEO SURVEILLANCE SYSTEM BY THIRD PARTIES**

(30) Priority: 15.07.2022 US 202263389810 P
(71) Applicant: Honeywell International Inc., Charlotte, NC 28202 (US)
(72) Inventor: CHANDRA, Chandrakantha, Charlotte, 28202 (US); SHANMUGAVELU, Pradeep Kumar, Charlotte, 28202 (US); KUMAR, Saravanan, Charlotte, 28202 (US); DEVI, Shyamala, Charlotte, 28202 (US); SRINIVAS, C., Charlotte, 28202 (US); RAMACHANDRAN, Vivek, Charlotte, 28202 (US)
(74) Representative: Houghton, Mark Phillip

(57) **Abstract**

A video surveillance system includes both system cameras that are commissioned as part of the video surveillance system and registered on-demand cameras that are voluntarily made available to the video surveillance system by third parties for use in conjunction with the video surveillance system. A method includes displaying on a display a representation of available cameras including both system cameras and registered on-demand cameras, wherein the system cameras are represented using a first style of icon and the on-demand cameras are represented using a second style of icon different from the first style of icon. A selection of two or more cameras from the representation of available cameras for display is accepted. Video streams from each of the selected two or more cameras are displayed on the display viewable by an operator of the video surveillance system.

## Description

### Technical Field

The present disclosure relates generally to video surveillance systems. More particularly, the present disclosure relates to video surveillance systems that employ on-demand cameras that are voluntarily made available to the video surveillance system by third parties.

### Background

A number of video surveillance systems employ video cameras that are installed or otherwise arranged around a surveillance area such as a city, a portion of a city, a facility or a building. In some cases, parts of a surveillance area may not have enough video cameras to be completely covered. Adding additional video cameras to a video surveillance system may be cost-prohibitive. What would be desirable are methods for augmenting a video surveillance system with on-demand cameras that are made available to the video surveillance system by third parties. This may include privately owned video cameras that are owned and maintained separate from the video surveillance system, for example.

### Summary

The present disclosure relates to video surveillance systems and more particularly to video surveillance systems that employ on-demand cameras that are made available to the video surveillance system by third parties. An example may be found in a method for operating a video surveillance system that includes both system cameras and registered on-demand cameras, wherein the system cameras are native to the video surveillance system and commissioned as part of the video surveillance system, and the registered on-demand cameras are owned and maintained separate from the video surveillance system but voluntarily made available to the video surveillance system by third parties. The illustrative method includes displaying on a display a representation of available cameras including both system cameras and registered on-demand cameras, wherein the system cameras are represented using a first style of icon and the on-demand cameras are represented using a second style of icon different from the first style of icon. A selection of two or more cameras from the representation of available cameras for display is accepted. Video streams from each of the selected two or more cameras are displayed on the display viewable by an operator of the video surveillance system.

Another example may be found in a method for operating a video surveillance system that includes both system cameras and registered on-demand cameras. The video surveillance system is configured to provide video streams from cameras within each of a plurality of surveillance areas. The illustrative method includes allowing private owners to register their camera(s) with the video surveillance system and onboarding the registered camera(s). The onboarded camera(s) are validated by an operator of the video surveillance system, thereby making the registered camera(s) available to the video surveillance system as on-demand cameras. A selection of a particular surveillance area out of the plurality of surveillance areas is accepted from an operator of the surveillance system. A graphical representation of cameras within the operator-selected surveillance area is displayed, wherein the cameras include both system cameras and registered on-demand cameras. A selection of two or more cameras from the graphical representation of cameras is accepted. Video streams from the selected two or more cameras are displayed on a display viewable by the operator.

Another example may be found in a method for operating a video surveillance system that includes both system cameras and registered on-demand cameras. The video surveillance system is configured to provide video streams from cameras within each of a plurality of surveillance areas. The illustrative method includes accepting from an operator a selection of a particular surveillance area out of the plurality of surveillance areas. A graphical representation of cameras within the operator-selected surveillance area is displayed, wherein the cameras including both system cameras that are represented using a first style of icon and registered on-demand cameras that are represented using a second style of icon different from the first style of icon in the graphical representation of cameras. A selection of two or more cameras from the graphical representation of cameras is selected. The selected two or more cameras are activated. Video streams from the selected two or more cameras are displayed on a display viewable by the operator.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### Brief Description of the Figures

The disclosure may be more completely understood in consideration of the following description of various examples in connection with the accompanying drawings, in which:
Figure 1 is a schematic block diagram of an illustrative video surveillance system;
Figure 2 is a flow diagram showing an illustrative method that may be carried out via the illustrative video surveillance system of Figure 1;
Figure 3 is a flow diagram showing an illustrative method that may be carried out via the illustrative video surveillance system of Figure 1;
Figure 4 is a flow diagram showing an illustrative method that may be carried out via the illustrative video surveillance system of Figure 1;
Figure 5 is a flow diagram showing an illustrative method that may be carried out via the illustrative video surveillance system of Figure 1;
Figure 6 is a flow diagram showing an illustrative method that may be carried out via the illustrative video surveillance system of Figure 1;
Figure 7 is a schematic block diagram of an illustrative architecture;
Figure 8 is a schematic block diagram of an illustrative architecture;
Figure 9 is a flow diagram showing an illustrative method;
Figure 10 is a flow diagram showing an illustrative method;
Figure 11 is a flow diagram showing an illustrative method;
Figure 12 is a flow diagram showing an illustrative method;
Figure 13 is a flow diagram showing an illustrative method;
Figure 14 is a flow diagram showing an illustrative method;
Figure 15 is a flow diagram showing an illustrative method;
Figure 16 is a flow diagram showing an illustrative method; and
Figures 17 through 20 are views of illustrative screen shots.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### Description

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

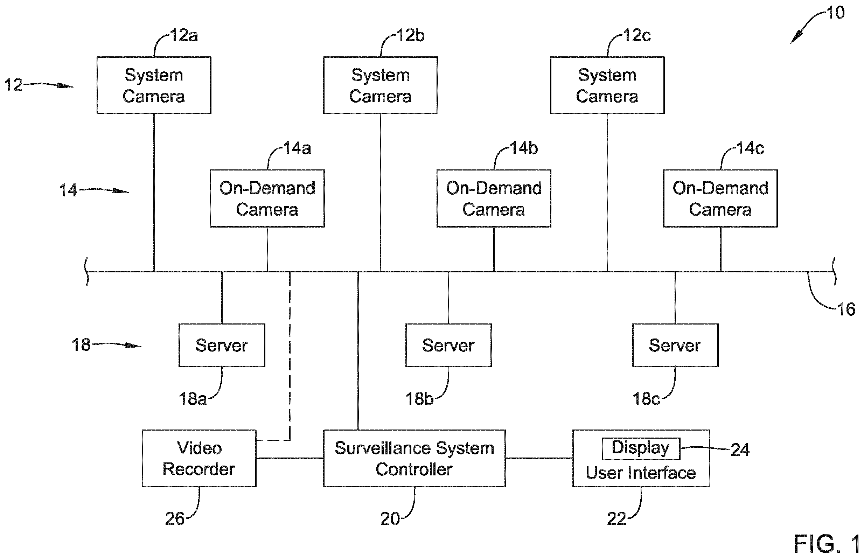

Figure 1 is a schematic block diagram of an illustrative video surveillance system 10. The illustrative video surveillance system 10 includes a number of system cameras 12, individually labeled as 12a, 12b and 12c. While a total of three system cameras 12 are shown, it will be appreciated that this is merely illustrative, as the video surveillance system 10 may include any number of system cameras 12, and in some instances may include a large number of system cameras 12, such as hundreds or even thousands of system cameras 12. A system camera 12 is a camera such as a video camera that is native to the video surveillance system and commissioned as part of the video surveillance system 10. The system cameras are typically owned and maintained by the entity owning and operating the video surveillance system 10.

The video surveillance system 10 utilizes a number of community or on-demand cameras 14, individually labeled as 14a, 14b and 14c. While a total of three on-demand cameras 14 are shown, it will be appreciated that this is merely illustrative, as the video surveillance system 10 may utilize any number of on-demand cameras 14, and in some instances may utilize a large number of on-demand cameras 14, such as hundreds or even thousands of on-demand cameras 14. An on-demand camera 14 is a camera such as a video camera that is made available to the video surveillance system 10, but is not native to or commission as part of the video surveillance system 10. An on-demand camera 14 is a camera such as a video camera that is typically owned and maintained by a third party that is separate from the entity that owns and operates the video surveillance system 10. As an example, an on-demand camera 14 may be a video camera that is part of a private video surveillance system that is distinct from the video surveillance system 10, where the private video surveillance system has voluntarily decided to share the video camera with the video surveillance system 10.

The video surveillance system 10 may include a network 16 by which the system cameras 12 and the on-demand cameras are able to communicate with other components of the video surveillance system 10. The video surveillance system 10 includes a number of servers 18, individually labeled as 18a, 18b and 18c. This is merely illustrative, as the video surveillance system 10 may have any number of servers 18. For example, the video surveillance system 10 may have only one server 18, or two servers 18. The video surveillance system 10 may have four, five, six or more servers 18. In some instances, the video surveillance system 10 may be configured to load balance between the individual servers 18 so that each server 18 is not overwhelmed by a large number of video streams from video cameras (both system cameras 12 and on-demand cameras 14) that are currently assigned to that particular server 18. At least some of the servers 18 may be cloud-based servers, for example.

The servers 18 may receive video streams from the system cameras 12 and the on-demand cameras 14 via the network 16. In some cases, the network 16 may include two or more distinct networks. For example, the system cameras 12 may be operably coupled to a video surveillance system network while the on-demand cameras 14 may be operably coupled to a public network, such as the Internet. Together, the video surveillance system network and the public network, and possibly others, constitute the network 16.

The illustrative video surveillance system 10 includes a surveillance system controller 20. The surveillance system controller 20 may be configured to control which system cameras 12 and which on-demand cameras 14 are assigned to each of the servers 18. The surveillance system controller 20 may be configured to onboard on-demand cameras 14 as the cameras are proffered by one or more third parties. In some cases, the surveillance system controller 20 may be configured to communicate with a user interface 22 that includes a display 24. The user interface 22 may be a personal computer, for example, with a keyboard and mouse, and one or more monitors that collectively function as the display 24. In some cases, the surveillance system controller 20 may be part of that same personal computer. In some instances, the surveillance system controller 20 may be part of a separate computer, which may be local or remote from where the system cameras 12 and the on-demand cameras 14 are located. The surveillance system controller 20 may be manifested within a cloud-based server, as an example.

In some cases, the surveillance system controller 20 may be operably coupled with, and control operation of, a video recorder 26. The video recorder 26 may be used to record at least some of the video streams incoming from the system cameras 12 and/or the on-demand cameras 14. In some cases, the video recorder 26 may be used only to record at least some of the video streams incoming from the system cameras 12, as in some jurisdictions video streams from the on-demand cameras 14 may not be recorded. In other jurisdictions, it may be permissible to record video streams from the on-demand cameras 14, for example. The video streams may pass through the surveillance system controller 20. In some cases, at least some of the video streams being recorded may pass directly to the video recorder 26 via the network 16. In some cases, the video recorder 26 may be a DVR (digital video recorder) or an NVR (network video recorder).

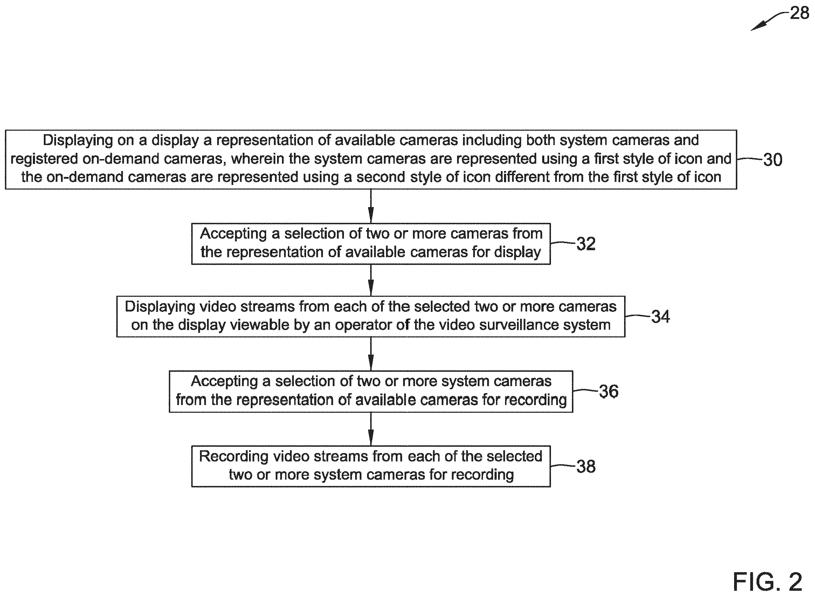

Figure 2 is a flow diagram showing an illustrative method 28 for operating a video surveillance system (such as the video surveillance system 10) that includes both system cameras (such as the system cameras 12) and registered on-demand cameras (such as the on-demand cameras 14), wherein the system cameras are commissioned as part of the video surveillance system and the registered on-demand cameras are voluntarily made available to the video surveillance system by third parties for use in conjunction with the video surveillance system. The illustrative method 28, which may be carried out by the surveillance system controller 20, includes displaying on a display (such as the display 24) a representation of available cameras including both system cameras and registered on-demand cameras, wherein the system cameras are represented using a first style of icon and the on-demand cameras are represented using a second style of icon different from the first style of icon, as indicated at block 30. A selection of two or more cameras from the representation of available cameras is selected for display, as indicated at block 32. In some cases, the selected two or more cameras may include both system cameras and on-demand cameras. Video streams from each of the selected two or more cameras are displayed on the display 24 viewable by an operator of the video surveillance system 10, as indicated at block 34. In some cases, the method 28 may further include accepting a selection of two or more system cameras from the representation of available cameras for recording, as indicated at block 36. The method 28 may further include recording video streams from each of the selected two or more system cameras for recording, as indicated at block 38.

In some cases, the video surveillance system may include a server having server resources. The registered on-demand cameras are made available for subsequent activation and deactivation by the operator of the video surveillance system 10. When a registered on-demand camera is deactivated (e.g. set in a deactivated state in the video surveillance system 10), the camera server does not apply server resources to intake the video stream from the deactivated camera. When the registered on-demand camera is activated (e.g. set in an activated state in the video surveillance system 10), the camera server applies server resources to intake the video stream from the activated camera. In some cases, intake of the video stream may include one or more of receiving the video stream, processing the video stream, display the video stream and/or recording the video stream.

In some cases, intake of the video stream may include receiving and storing the video stream, and when the registered on-demand camera is deactivated by the operator, the camera server does not apply server resource to receive and possibly store the video stream from the deactivated camera. In some cases, the selected two or more cameras include two or more on-demand cameras, and wherein the method 28 may include activating and/or deactivating the two or more on-demand cameras in a bulk fashion. That is, the operator may designate two or more on-demand cameras for activation (or deactivation) in bulk, and once initiated, the video surveillance system may activate (or deactivate) all of the designed on-demand cameras in bulk without further operating input.

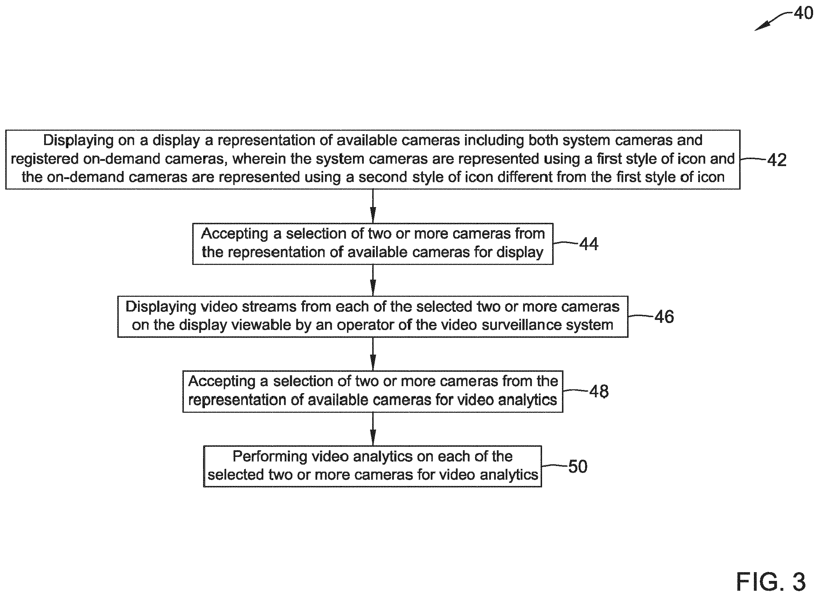

Figure 3 is a flow diagram showing an illustrative method 40 for operating a video surveillance system (such as the video surveillance system 10) that includes both system cameras (such as the system cameras 12) and registered on-demand cameras (such as the on-demand cameras 14), wherein the system cameras are commissioned as part of the video surveillance system and the registered on-demand cameras are voluntarily made available to the video surveillance system by third parties for use in conjunction with the video surveillance system. The illustrative method 40, which may be carried out by the surveillance system controller 20, includes displaying on a display (such as the display 24) a representation of available cameras including both system cameras and registered on-demand cameras, wherein the system cameras are represented using a first style of icon and the on-demand cameras are represented using a second style of icon different from the first style of icon, as indicated at block 42. A selection of two or more cameras from the representation of available cameras is selected for display, as indicated at block 44. In some cases, this selection is made by an operator of the video surveillance system via the user interface 22. In some cases, the selected two or more cameras may include both system cameras and on-demand cameras. Video streams from each of the selected two or more cameras are displayed on the display viewable by an operator of the video surveillance system, as indicated at block 46. In some cases, the method 40 may further include accepting a selection of two or more cameras from the representation of available cameras for video analytics, as indicated at block 48. The method 40 may further include performing video analytics on each of the video streams of the selected two or more cameras for video analytics, as indicated at block 50.

In some cases, the video surveillance system may include a server having server resources. The registered on-demand cameras are available for subsequent activation and deactivation by the operator of the video surveillance system. When a registered on-demand camera is deactivated by the operator, the camera server does not apply server resources to intake the video stream from the deactivated camera. When the registered on-demand camera is activated by the operator, the camera server applies server resources to intake the video stream from the activated camera. In some cases, intake of the video stream may include one or more of receiving the video stream, processing the video stream and/or displaying the video stream. In some cases, intake of the video stream may include receiving and possibly storing the video stream, and when the registered on-demand camera is deactivated by the operator, the camera server does not apply server resource to receive and possibly store the video stream from the deactivated camera. The deactivated on-demand cameras remain available for subsequent activation by the operator, but present little or no load to the camera server(s). In some cases, the selected two or more cameras include two or more on-demand cameras, and wherein the method 40 may include activating and/or deactivating the two or more on-demand cameras in bulk.

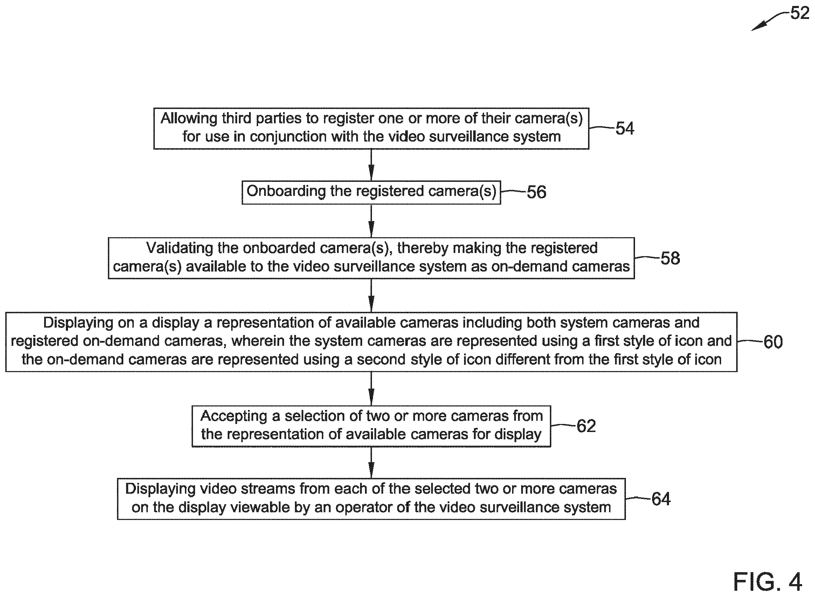

Figure 4 is a flow diagram showing an illustrative method 52 for operating a video surveillance system (such as the video surveillance system 10) that includes both system cameras (such as the system cameras 12) and registered on-demand cameras (such as the on-demand cameras 14), wherein the system cameras are commissioned as part of the video surveillance system and the registered on-demand cameras are voluntarily made available to the video surveillance system by third parties for use in conjunction with the video surveillance system. The illustrative method 52, which may be carried out by the surveillance system controller 20, includes allowing third parties to register one or more of their camera(s) for use in conjunction with the video surveillance system 10, as indicated at block 54. The registered on-demand camera(s) are onboarded, as indicated at block 56. The onboarded on-demand camera(s) are validated by an operator of the video surveillance system, and once validated, made available to the video surveillance system as on-demand camera(s), as indicated at block 58.

The illustrative method 52 includes displaying on a display (such as the display 24) a representation of available cameras including both system cameras and registered on-demand cameras, wherein the system cameras are represented using a first style of icon and the on-demand cameras are represented using a second style of icon different from the first style of icon, as indicated at block 60. A selection of two or more cameras from the representation of available cameras is selected for display, as indicated at block 62. In some cases, the selected two or more cameras may include both system cameras and on-demand cameras. Video streams from each of the selected two or more cameras are displayed on the display viewable by an operator of the video surveillance system, as indicated at block 64.

In some cases, the video surveillance system may include a server having server resources. The registered on-demand cameras are available for subsequent activation and deactivation by an operator of the video surveillance system. When a registered on-demand camera is deactivated by the operator, the camera server does not apply server resources to intake the video stream from the deactivated camera. When the registered on-demand camera is activated by the operator, the camera server applies server resources to intake the video stream from the activated camera. In some cases, intake of the video stream may include one or more of receiving the video stream, processing the video stream and/or displaying the video stream. In some cases, intake of the video stream may include receiving the video stream, and when the registered on-demand camera is deactivated by the operator, the camera server does not apply server resource to receive the video stream from the deactivated camera. In some cases, the selected two or more cameras include two or more on-demand cameras, and wherein the method 52 may include activating and/or deactivating the two or more on-demand cameras in bulk.

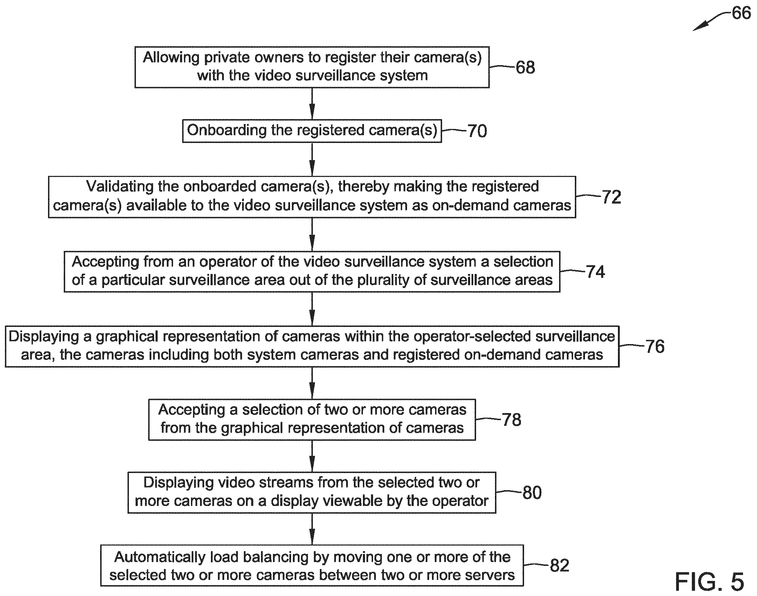

Figure 5 is a flow diagram showing an illustrative method 66 for operating a video surveillance system (such as the video surveillance system 10) that includes both system cameras (such as the system cameras 12) and registered on-demand cameras (such as the on-demand cameras 14). The video surveillance system is configured to provide video streams from cameras within each of a plurality of surveillance areas. The illustrative method 66 includes allowing private owners to register their camera(s) with the video surveillance system, as indicated at block 68. The registered camera(s) are onboarded, as indicated at block 70. The onboarded camera(s) are validated by an operator of the video surveillance system, and once validated, made available to the video surveillance system as on-demand cameras, as indicated at block 72. A selection of a particular surveillance area out of the plurality of surveillance areas is accepted from an operator of the video surveillance system, as indicated at block 74. A graphical representation of cameras within the operator-selected surveillance area is displayed, where the cameras including both system cameras and registered on-demand cameras, as indicated at block 76. A selection of two or more cameras from the graphical representation of cameras is selected, as indicated at block 78. The selected two or more cameras may include both system cameras and registered on-demand cameras.

Video streams from the selected two or more cameras are displayed on a display viewable by the operator, as indicated at block 80. In some cases, the illustrative method 66 may further include finding processing resources for streaming video streams from each of the selected two or more cameras. Finding processing resources may include, for example, selecting two or more cameras outside of the selected surveillance area to deactivate, thereby freeing up some processing resources of the server(s). In some cases, the method 66 may further include automatically load balancing the servers by moving one or more of the selected two or more cameras between two or more servers.

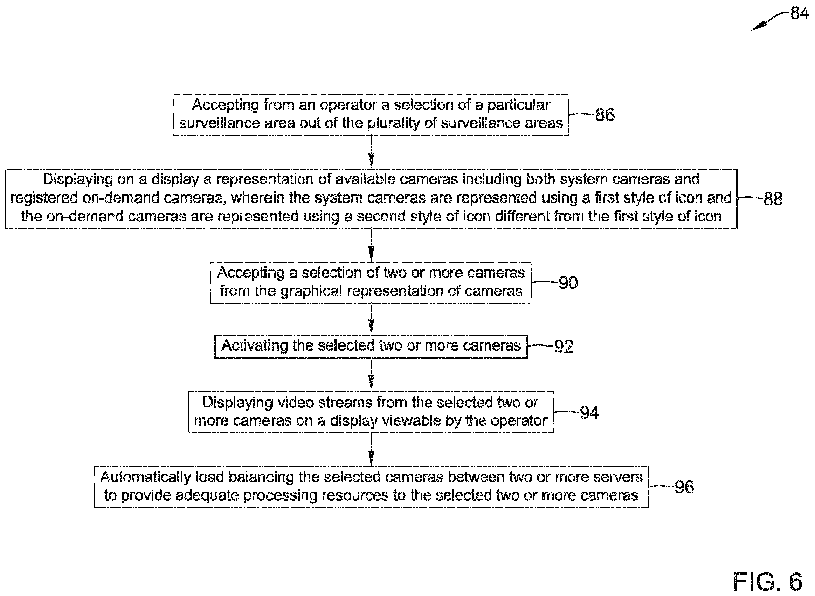

Figure 6 is a flow diagram showing an illustrative method 84 for operating a video surveillance system (such as the video surveillance system 10) that includes both system cameras (such as the system cameras 12) and registered on-demand cameras (such as the on-demand cameras 14). The video surveillance system is configured to provide video streams from cameras within each of a plurality of surveillance areas. The illustrative method 84 includes accepting from an operator a selection of a particular surveillance area out of the plurality of surveillance areas, as indicated at block 86. In some cases, this may include an operator drawing a boundary of a desired surveillance area on a map view of an area covered by the video surveillance system. In other cases, an operator may select a predefined surveillance area out of a plurality of predefined surveillance areas. These are just examples.

A graphical representation of cameras within the operator-selected surveillance area is displayed. The cameras may include both system cameras that are represented using a first style of icon and registered on-demand cameras that are represented using a second style of icon different from the first style of icon, as indicated at block 88. In some cases, the graphical representation of cameras may include a map view, where each camera is represented as a corresponding icon placed at the respective geographical location of the camera on the map view. In some cases, the graphical representation of cameras may include a list view, where each camera is represented as a corresponding icon in the list view. In some cases, the graphical representation of cameras may include both a map view and a list view. A selection of two or more cameras from the graphical representation of cameras is accepted, as indicated at block 90. The selected two or more cameras are activated, as indicated at block 92. Video streams from the selected two or more cameras are displayed on a display viewable by the operator, as indicated at block 94.

In some cases, the graphical representation of cameras within the operator-selected surveillance area may be displayed concurrently with one or more video streams produced by currently selected cameras. The first style of icon used to represent system cameras may include an icon indicating a dome camera, where appropriate. In some cases, the method 84 may further include automatically load balancing the selected cameras between two or more servers to provide adequate processing resources to the selected two or more cameras, as indicated at block 96.

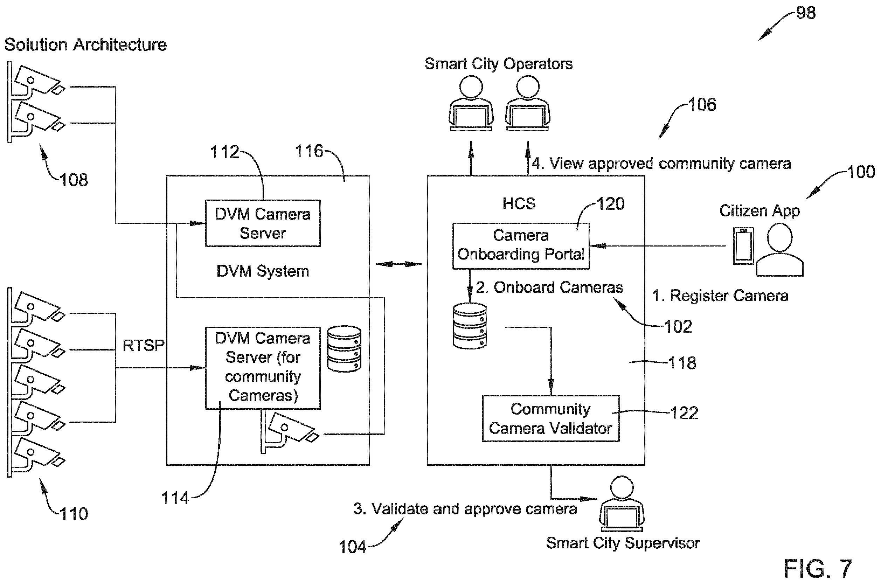

Figure 7 is a schematic block diagram of an illustrative architecture 98 for a video surveillance system (such as the video surveillance system 10). The illustrative architecture 98 may be implemented within the video surveillance system 10. Step 1, as generally indicated at 100, includes private citizens or third parties registering their camera or cameras for use by the video surveillance system 10. Step 2, as generally indicated at 102, includes onboarding the cameras registered at 100. Step 3, as generally indicated at 104, includes validating and approving the cameras registered at 100 by an operator of the video surveillance system. Step 4, as generally indicated at 106, includes viewing the approved community or on-demand cameras.

The architecture 98 includes system cameras 108 and community or on-demand cameras 110. The system cameras 108 communicate with a DVM camera server 112 while the on-demand cameras 110 communicate with a DVM camera server 114. The DVM camera server 112 and the DVM camera server 114 are both part of a DVM system 116. The architecture 98 includes an HCS 118. The HCS 118 includes a camera onboarding portal 120 that is used to register and onboard third party cameras, and a community camera validator 122 that is used to validate registered on-demand cameras before they are made available for use on the video surveillance system.

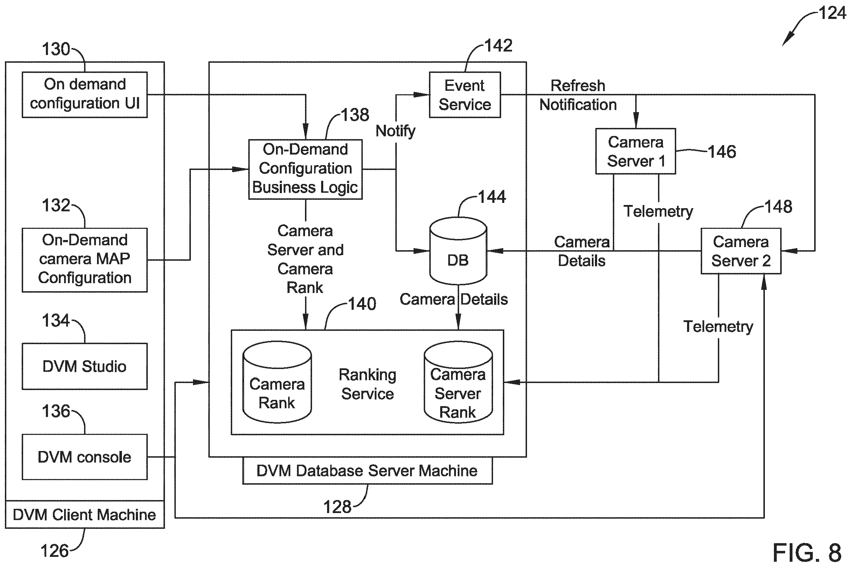

Figure 8 is a schematic block diagram of an illustrative architecture 124. The illustrative architecture 124 may include a DVM Client Machine 126 and a DVM Database Server Machine 128. The DVM Client Machine 126 includes an on-demand configuration user interface 130, an on-demand camera MAP configuration block 132, a DVM studio block 134 and a DVM console 136. The on-demand configuration user interface 130, the on-demand camera MAP configuration block 132 and the DVM console 136 each communicate with the DVM Database Server Machine 128.

The DVM Database Server Machine 128 includes an on-demand configuration business logic block 138, a Ranking Service 140, an Event Service block 142 and a database 144. The DVM Database Server Machine 128 communicates with a camera server 146 and a camera server 148 in order to rank the cameras and determine which cameras should be assigned to the camera server 146 and which cameras should be assigned to the camera server 148. While two camera servers 146 and 148 are shown, it will be appreciated that this is merely illustrative. In some cases, the camera servers 146 and 148 may be on separate machine hardware, while in other cases, the camera server 146 and 148 may be on separate virtual machines. These are just example implementations.

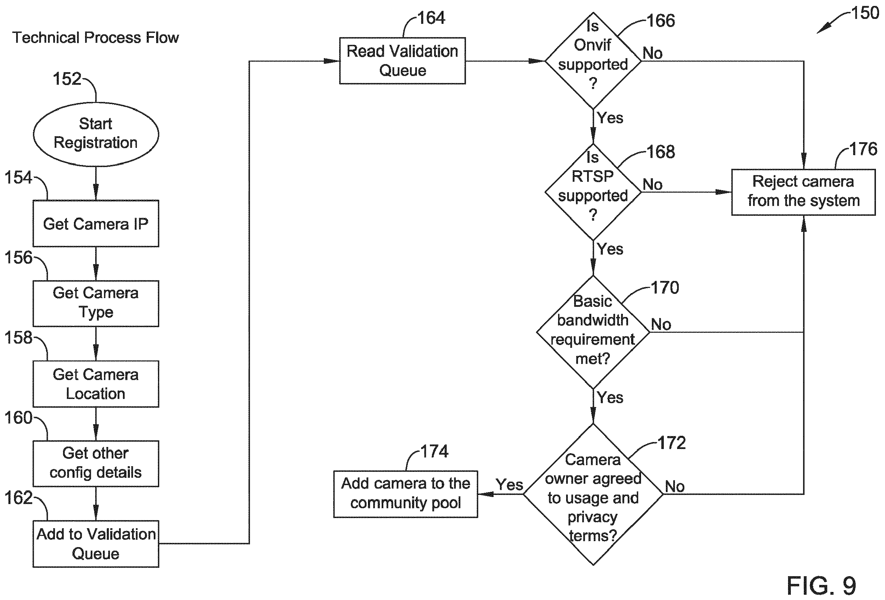

Figure 9 is a flow diagram showing an illustrative method 150 for registering an on-demand camera. The method 150 begins with starting registration, as indicated at block 162. The camera IP address is obtained, as indicated at block 154. The camera type is obtained, as indicated at block 156. The camera location is obtained, as indicated at block 158. Other configuration details are obtained, as indicated at block 160. The camera is added to a validation queue, as indicated at block 162. The validation queue is read, as indicated at block 164. In the example shown, a determination is made whether the camera supports one or more supported communication and/or streaming standards (e.g. Onvif, RTSP), as indicated at decision blocks 166 and 268. A determination is made whether basic bandwidth requirements are met, as indicated at decision block 170. A determination is made whether the camera owner agreed to usage and privacy terms, as indicated at decision block 172. If the answer to all of those question is yes, then control passes to block 174 and the registered camera is added to the community or on-demand camera pool. If the answer to any of the questions is no, control passes to block 176 and the camera is rejected.

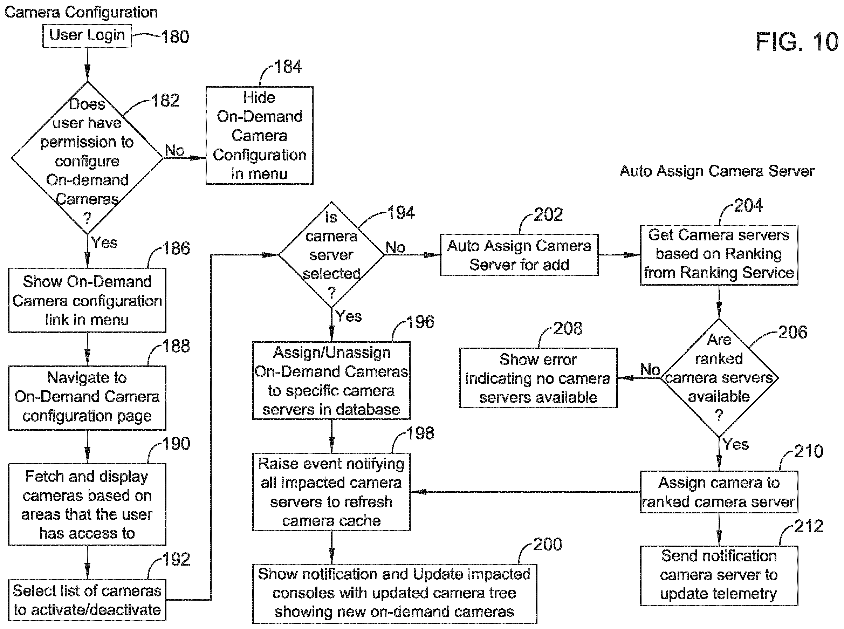

Figure 10 is a flow diagram showing an illustrative method 178 for configuring a camera. The method 178 starts with a user login, as indicated at block 180. A determination is made at a decision block 182 whether the user has permission to configure on-demand cameras. If not, control passes to block 184 where the configuration menu is hidden from the user. If yes, control passes to block 186, where the configuration menu is displayed for the user. The user navigates to the on-demand configuration page, as indicated at block 188. Cameras are fetched and displayed based upon the areas that the user has access to, as indicated at block 190. A list of cameras to activate or deactivate is selected, as indicated at block 192.

At decision block 194, a determination is made as to whether a camera server has been selected. If yes, on-demand cameras are assigned and/or unassigned to specific camera servers, as indicated at block 196. An indication that all impacted camera servers should refresh their camera cache is provided, as indicated at block 198. The updated information is shown as indicated at block 200. Back to decision block 194, if the answer was no, control passes to block 202 where a camera server is automatically assigned. Camera server and ranking information is obtained, as indicated at block 204. At decision block 206, a determination is made as to whether ranked camera servers are available. If not, control passes to block 208 and an error is displayed. If yes, control passes to block 210, where the cameras are assigned. Notifications are transmitted, as indicated at block 212.

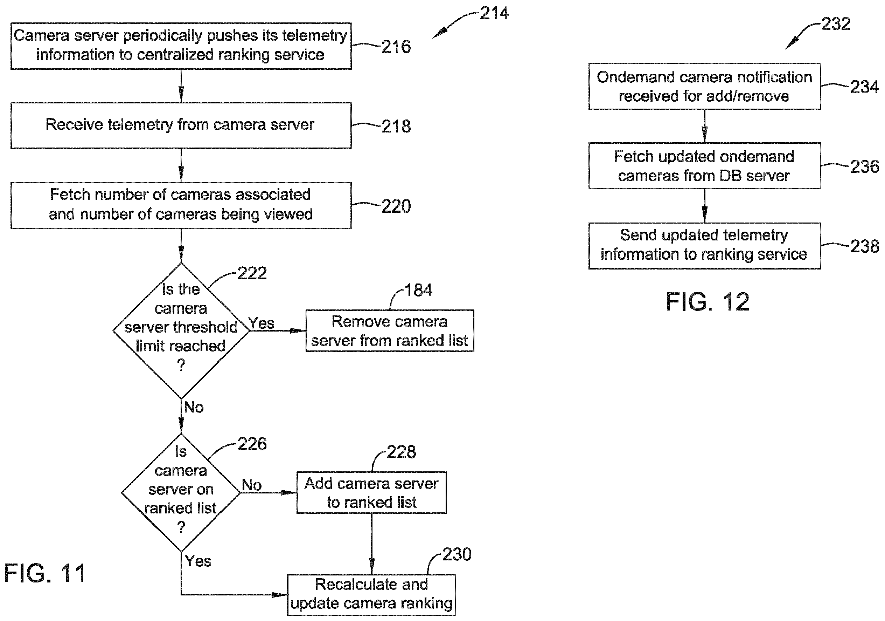

Figure 11 is a flow diagram showing an illustrative method 214 for a ranking service. The method 214 begins at block 216, where the camera server periodically publishes its telemetry information. Telemetry information is received from the camera server, as indicated at block 218. The number of cameras associated and cameras being viewed is fetched, as indicated at block 220. At decision block 222, a determination is made as to whether the camera server threshold limit has been reached. If so, control passes to block 224 and the camera server is removed from the ranked list. If not, control passes to decision block 226, where a determination is made as to whether the camera server is on the ranked list. If not, control passes to block 228 and the camera server is added to the ranked list. Otherwise, control passes to block 230, where the camera server rankings are recalculated and updated. In some cases, when an on-board camera is activated by an operator, the camera is assigned to one of the camera servers based on the camera server rankings. For example, a newly activated camera may be assigned to the camera server with the highest ranking (e.g. lowest current server load).

Figure 12 is a flow diagram showing an illustrative method 232. The method 232 begins with a camera server receiving a notification to add or remove cameras, as indicated at block 234. An updated listing of activated on-demand cameras are fetched from a database server, as indicated at block 236. The updated telemetry information is sent to the ranking service, as indicated at block 238, and an updated ranking is calculated. When necessary, some or all of the activated on-demand cameras may be automatically re-assigned to a different camera server to achieve a level of load balancing between the camera servers.

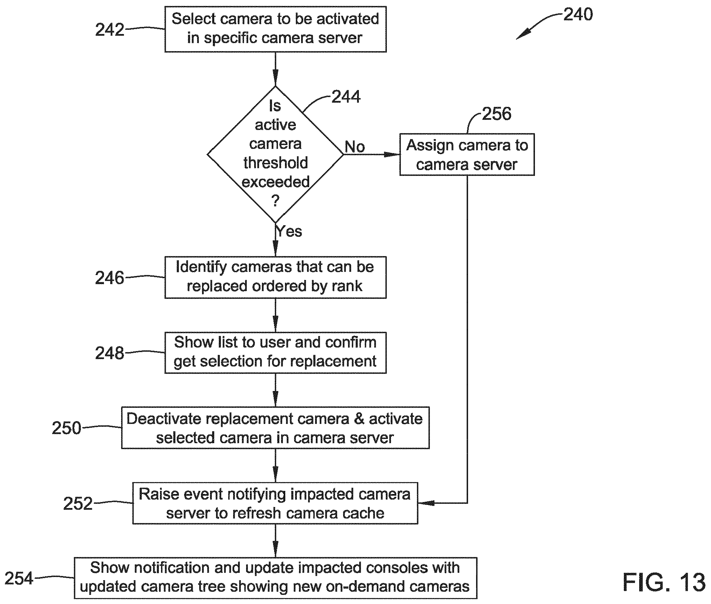

Figure 13 is a flow diagram showing an illustrative method 240 for automatically removing on-demand cameras to free up camera server resources to, for example, handle newly activated on-demand cameras. The illustrative method 240 includes selecting a camera to be activated, as indicated at block 242. At decision block 244, a determination is made as to whether an active camera threshold has been exceeded. If yes, control passes to block 246 where cameras that can be replaced (deactivated) are identified. The list is shown to the user, and selections of which cameras to removed (deactivate) is approved, as indicated at block 248. At block 250, the selected cameras are deactivated and the new camera is activated in the camera server. An event notification is raised, as indicated at block 252. Control passes to block 254, wherein updated information is provided. Back to decision block 244, if the active camera threshold has not been exceeded, control passes to block 256 and the camera is assigned to the camera server. Control then passes to block 252.

In some cases, the cameras may be ranked to help identify which camera(s) to remove (deactivate) when making room for a newly activated camera. Camera rank can be based on various criteria. For example, in some cases, camera rank may be based at least in part upon the number of times that a camera has been pulled into the console workspace and viewed by an operator, as this is an indication of usefulness of the camera. Camera rank may be based at least in part upon the number of times a camera has been activated or deactivated. In some cases, camera rank may be based at least in part upon how recently a particular camera was added, with recently added cameras having a higher or even highest ranking. The higher the camera rank, the more the camera is used. The lower the camera rank, the less the camera is used. Least used cameras (lowest rankings) are candidates for deactivation.

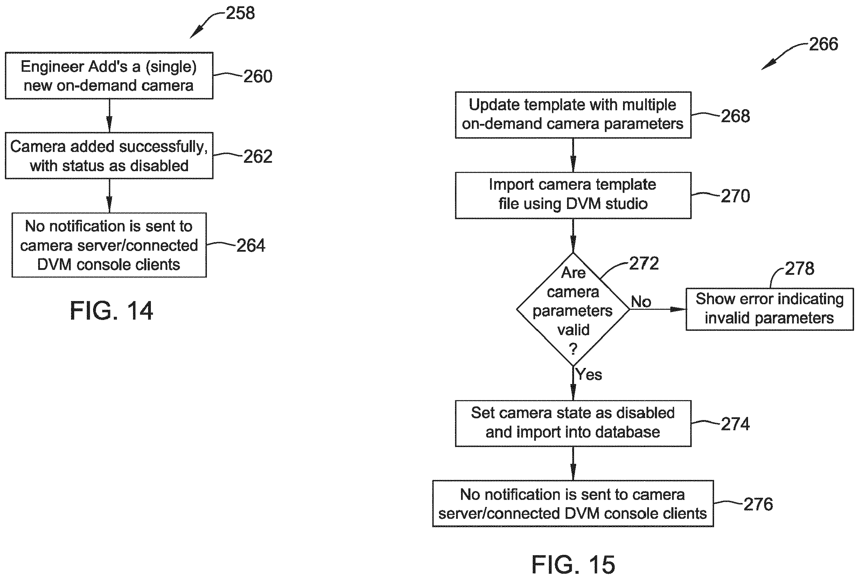

Figure 14 is a flow diagram showing an illustrative method 258 for camera onboarding. The method 258 begins at block 260, where a single new on-demand camera is added. At block 262, the camera is successfully added, although its status is deactivated until such time as the camera is subsequently activated. No notifications are sent, as indicated at block 264.

Figure 15 is a flow diagram showing an illustrative method 266 of bulk onboarding of cameras. The method 266 begins with updating a template with camera parameters, as indicated at decision block 268. The template file is imported, as indicated at block 270. At decision block 272, a determination is made as to whether the camera parameters are valid. If yes, control passes to block 274 where the cameras are added but deactivated. Control passes to block 276, where no notification is sent. However, if the camera parameters are determined to not be valid at decision block 272, control passes to block 278, where the invalid parameter or parameters are displayed.

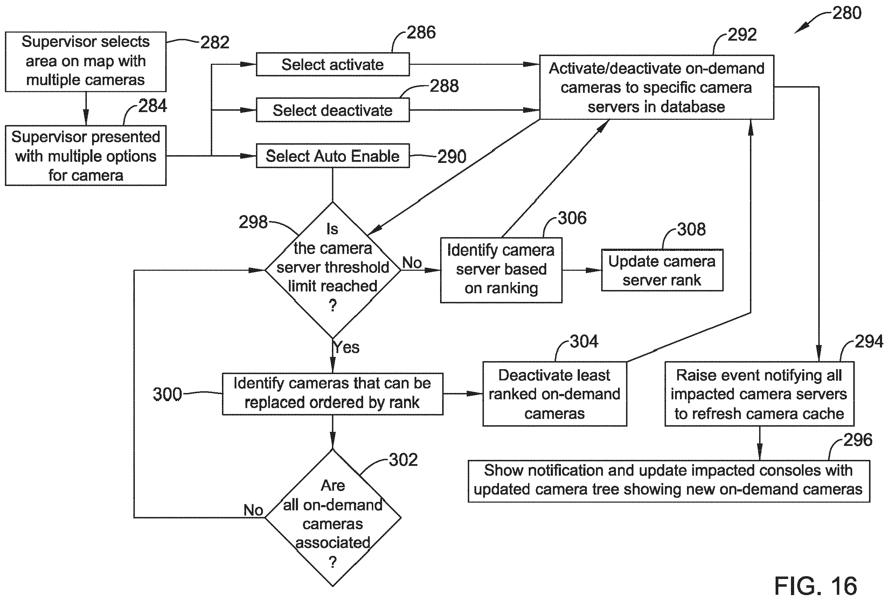

Figure 16 is a flow diagram showing an illustrative method 280 for activating or deactivating a camera from a map. The method 280 starts with selecting an area of a map with multiple cameras, as indicated at block 282. Multiple camera control options are selected, as indicated at block 284. For example, the user can select activate, as indicated at block 286. The user can select deactivate, as indicated at block 288. The user can select auto enable, as indicated at block 290. If the user selects activate or deactivate, control passes to block 292, where specific cameras in the selected area of the map are activated or deactivated, respectively. An event notification is raised notifying all impacted camera servers to refresh the camera cache, as indicated at block 294. Updates are published to the operator consoles with an updated camera tree showing the new on-demand camera line up, as indicated at block 296.

If the user selected auto enable, control passes to decision block 298, where a determination is made as to whether the camera server threshold limit has been reached. If yes, control passes to decision block 300 where cameras to be removed are identified (sometimes using a camera ranking). At decision block 302, a determination is made as to whether all of the on-demand cameras are associated with a camera server. If not, control reverts to decision block 300. In some cases, least used on-demand cameras are deactivated, as indicated at block 304. If the answer is no at decision block 298, control passes to block 306, where a suitable camera server is identified based on ranking and the camera(s) is assigned to that camera server. Then, the camera server rank is updated as shown at block 308.

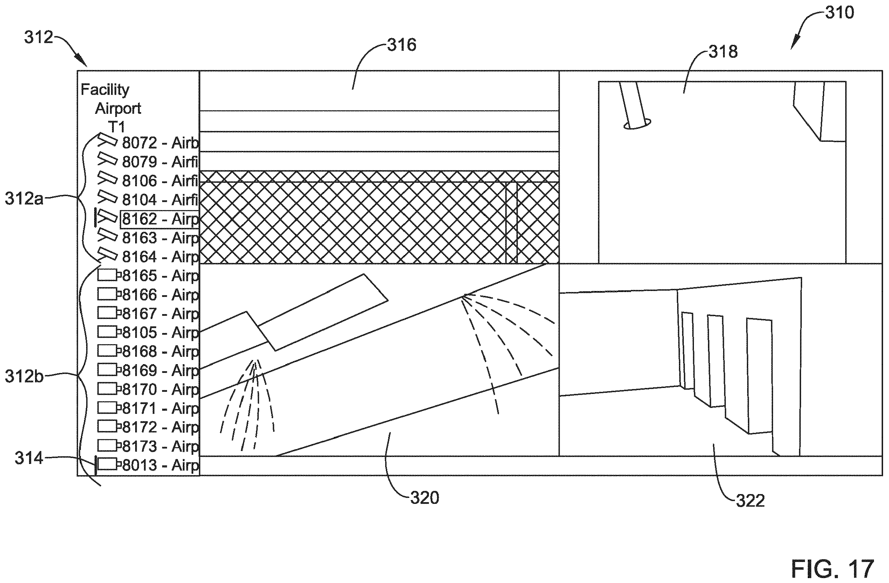

Figures 17 through 20 are views of illustrative screen shots. Figure 17 shows an illustrative screen 310. The illustrative screen 310 includes a listing 312 of available cameras, both system cameras shown in section 312a and on-demand cameras shown in section 312b. It will be appreciated that the camera icons used to represent the system cameras are different from the camera icons used to represent the on-demand cameras. Some of the on-demand cameras are dome cameras, as shown for example at 314. The screen 310 also includes several video streams 316, 318, 320 and 322. In some cases, at least some of the video streams 316, 318, 320 and 322 may not be video streams, but may instead be screen captures, or still images. While a total of four video streams 316, 318, 320 and 322 are shown, it will be appreciated that this is merely illustrative, as the video surveillance system 10 may display any number of video streams simultaneously, depending on bandwidth, available screen space and the particular area of interest, such as how many cameras are even available in that area.

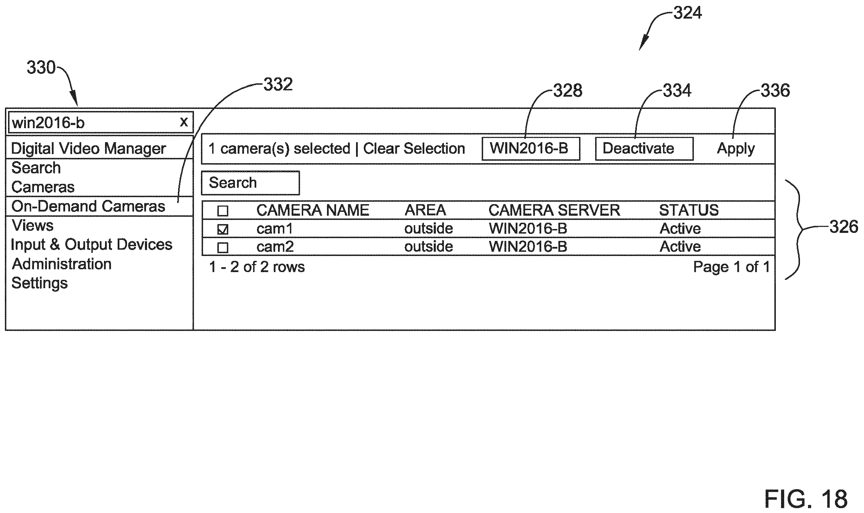

Figure 18 shows an illustrative screen 324 demonstrating activation and deactivation of cameras. A user can select on-demand cameras in bulk and can associate them with a camera server. The screen 324 includes a listing 326 of cameras that may encompass available cameras. The screen 324 includes a pull-down menu 328 listing all of the available camera servers. If none are selected, cameras are auto-assigned. The screen 324 includes a menu section 330 that provides options. As shown, the On-Demand Cameras button 332 has been selected. The screen 324 includes a pull-down menu 334 that allows a user to select between activating and deactivating, although deactivating is selected as shown. An APPLY button 336 allows the user to proceed.

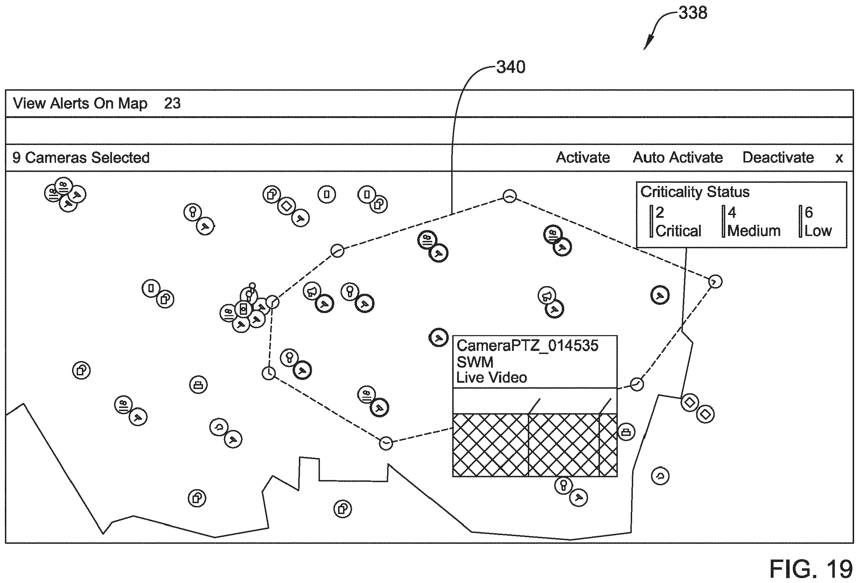

Figure 19 shows an illustrative screen 338 that shows a map view and a number of available cameras on the map view. On-demand cameras that have been activated are highlighted within a particular area of interest 340. In some cases, a user may manually define the area of interest 340 on the map, and in response, all or some of the available on-demand cameras that are within the area of interest 340 may be activated. In some cases, the area of interest 340 may be automatically identified around a particular location, such as a location where an event of interest has been detected. In some cases, the area of interest 340 may be automatically defined as a circle about the particular location with a pre-defined radius, such as ten blocks or one-half of a mile. In some cases, some or all of the on-demand cameras inside of the area of interest 340 may be activated, and some or all of the on-demand cameras outside of the area of interest 340 may be deactivated. These are just examples.

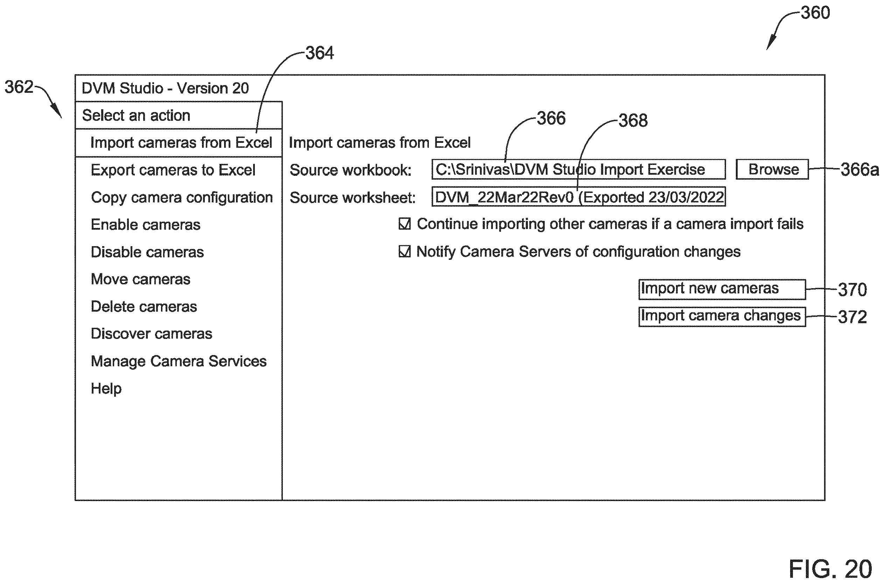

Figure 20 shows an illustrative screen 360 providing an example of bulk import of on-demand cameras. The screen 360 includes a menu 362 that provides for a variety of different tasks. As shown, an Import cameras from Excel^{™} button 364 has been selected. As a result, the screen 360 includes a source workbook text box 366 including a browse button 366a and a source worksheet pulldown menu 368. The screen 360 includes an Import new cameras button 370 and an Import camera changes button 372.

The source workbook may be an Excel^{™} spreadsheet that includes a plurality of rows each corresponding to a respective camera, and a plurality of columns for specifying different camera parameters for each of the respective cameras. The different camera parameters represented in the plurality of columns may include, for example, a camera name, a desired camera server, a camera location (e.g. GPS coordinates), a camera description, a camera IP address, a camera stream format, a camera communication protocol and/or any other suitable camera parameter. In some cases, and to facilitate the collection of required and optional information for registration of third party cameras, a template may be created and distributed to interested third parties, where the template includes fields for required and optional camera parameters. Once populated by a third party, the template may be returned and used to on-board the on-demand cameras of the third party for use with the video surveillance system.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for operating a video surveillance system that includes both system cameras and registered on-demand cameras, wherein the system cameras are commissioned as part of the video surveillance system and the registered on-demand cameras are voluntarily made available to the video surveillance system by third parties for use in conjunction with the video surveillance system, the method comprising:
displaying on a display a representation of available cameras including both system cameras and registered on-demand cameras, wherein the system cameras are represented using a first style of icon and the on-demand cameras are represented using a second style of icon different from the first style of icon;
accepting a selection of two or more cameras from the representation of available cameras for display; and
displaying video streams from each of the selected two or more cameras on the display viewable by an operator of the video surveillance system.

2. The method of claim 1, wherein the selected two or more cameras include both system cameras and registered on-demand cameras.

3. The method of claim 1, further comprising:
accepting a selection of two or more system cameras from the representation of available cameras for recording; and
recording video streams from each of the selected two or more system cameras.

4. The method of claim 1, further comprising:
accepting a selection of two or more cameras from the representation of available cameras for video analytics; and
performing video analytics on each of the selected two or more cameras for video analytics.

5. The method of claim 1, further comprising
allowing third parties to register one or more of their camera(s) for use in conjunction with the video surveillance system;
onboarding the registered camera(s); and
validating the onboarded camera(s), thereby making the registered camera(s) available to the video surveillance system as on-demand cameras.

6. The method of claim 1, wherein the video surveillance system includes a camera server with server resources.

7. The method of claim 6, wherein the registered on-demand cameras are available for subsequent activation and deactivation by the operator of the video surveillance system, wherein;
when a registered on-demand camera is deactivated by the operator, the camera server does not apply server resources to intake the video stream from the deactivated camera; and
when the registered on-demand camera is activated by the operator, the camera server applies server resources to intake the video stream from the activated camera.

8. The method of claim 7, wherein the intake of the video stream includes one or more of receiving the video stream, processing the video stream and/or displaying the video stream.

9. The method of claim 7, wherein the intake of the video stream includes receiving the video stream, and wherein when the registered on-demand camera is deactivated by the operator, the camera server does not apply server resource to receive the video stream from the deactivated camera.

10. The method of claim 7, wherein the selected two or more cameras include two or more on-demand cameras, and wherein the method comprises activating the two or more on-demand cameras in bulk.

11. The method of claim 7, wherein the selected two or more cameras include two or more on-demand cameras, and wherein the method comprises deactivating the two or more on-demand cameras in bulk.

12. A video surveillance system that includes both system cameras and registered on-demand cameras, the video surveillance system configured to provide video streams from cameras within each of a plurality of surveillance areas, the video surveillance system comprising:
a user interface including a display;
a controller operatively coupled to the user interface, the system cameras and the registered on-demand cameras, the controller configured to:
allow private owners to register their camera(s) with the video surveillance system;
onboard the registered camera(s);
validate the onboarded camera(s), thereby making the registered camera(s) available to the video surveillance system as on-demand cameras;
accept from an operator via the user interface of the video surveillance system a selection of a particular surveillance area out of the plurality of surveillance areas;
display a graphical representation of cameras within the operator-selected surveillance area, the cameras including both system cameras and registered on-demand cameras;
accept a selection of two or more cameras from the graphical representation of cameras; and
display video streams from the selected two or more cameras on the display.

13. The video surveillance system of claim 12, wherein the selected two or more cameras include both system cameras and registered on-demand cameras.

14. The video surveillance system of claim 12, wherein the controller is configured to activate the selected two or more cameras, wherein activating the selected two or more cameras includes assigning processing resources for streaming video streams from each of the selected two or more cameras.

15. The video surveillance system of claim 14, wherein assigning processing resources comprises selecting two or more cameras outside of the selected surveillance area to deactivate to free up some processing resources.
